# EUROPÄISCHE PATENTANMELDUNG

(11) **EP 4 328 335 A1**
(43) Veröffentlichungstag der Anmeldung: **28.02.2024**
(21) Anmeldenummer: 22192367.5
(22) Anmeldetag: 26.08.2022
(51) Int. Cl.: C22B 3/08, C22B 3/00, C22B 26/12, C22B 47/00, C25B 1/16, H01M 4/525, H01M 10/54

(54) **VERFAHREN ZUR HERSTELLUNG VON KATHODENMATERIAL AUS BATTERIEABFÄLLEN**

(71) Anmelder: H.C. Starck Tungsten GmbH, 80335 München (DE)
(72) Erfinder: Meese-Marktscheffel, Juliane, 38462 Goslar (DE); Olbrich, Armin, 38723 Seesen (DE); Egeberg, Alexander, 38642 Goslar (DE); Zeugner, Alexander, 38302 Wolfenbüttel (DE); Wolff, Alexander, 31141 Hildesheim (DE); Bäcker, Werner, 51688 Wipperfürth (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Verfahren zur Herstellung von Kathodenmaterial aus Batterieabfällen sowie ein Kathodenmaterial, das gemäß dem erfindungsgemäßen Verfahren gewonnen wurde.

## Beschreibung

Die vorliegende Erfindung betrifft ein Verfahren zur Herstellung von Kathodenmaterial aus Batterieabfällen sowie ein Kathodenmaterial, das gemäß dem erfindungsgemäßen Verfahren gewonnen wurde.

Die Verkehrs- oder Mobilitätswende bezeichnet den gesellschaftlichen, technologischen und politischen Prozess, Verkehr und Mobilität auf nachhaltige Energieträger, sanfte Mobilitätsnutzung und eine Vernetzung verschiedener Formen des Individualverkehrs und des öffentlichen Personennahverkehrs umzustellen. Ein Standbein der Mobilitätswende ist die sogenannte Antriebswende, welche die schrittweise Ersetzung von Verbrennungsmotoren durch solche, die durch Wasserstoff, Brennstoffzellen oder batterieelektrisch angetrieben werden.

Erklärtes und wichtigstes Ziel der Mobilitätswende ist der Klima- und Umweltschutz. Um dies zu erreichen, ist nicht nur die Senkung der CO₂-Emission unerlässlich, sondern auch ein effizientes Kreislaufsystem, um eine Belastung der Umwelt und drohende Rohstoffknappheit in der Produktion von batterieelektrisch betriebenen Antriebsalternativen zu vermeiden.

Im Bereich der batterieelektrisch betriebenen Antriebe haben sich insbesondere Lithium-Ionen-Batterien (LIB) als ein vielversprechendes Speichersystem für die benötigte elektrische Energie erwiesen. Ohne eine parallele und sinnvolle globale Recyclingstrategie solcher Batterien ist das erklärte Ziel der Mobilitätswende jedoch nicht zu erreichen. Eine ganzheitliche Wiedergewinnung der in gebrauchten Batteriematerialien enthaltenen Wertmetalle wie Cobalt, Nickel und Mangan, aber insbesondere auch des Lithiums, ist daher unabdingbar. Bei der Primärproduktion von Lithium aus Solen wird zwar die Kraft der Sonne genutzt, was zunächst ökologisch verträglich erscheint, allerdings ist die derzeitige Förderung mit großen Eingriffen in den Wasserhaushalt der entsprechenden Regionen verbunden. Studien zufolge ist mit einem spezifischen Frischwasserverbrauch von etwa 44 Liter pro Kilogramm gewonnenen Lithiums zu rechnen. Auch wenn die weltweiten Lithiumreserven als verhältnismäßig hoch eingeschätzt werden sind sie doch endlich und der beschriebene primäre Produktionsprozess ist langwierig. Eine quantitative und schnelle Rückgewinnung durch nachhaltiges Recycling von Lithium zusammen mit den anderen Wertmetallen Cobalt, Nickel und Mangan zur Herstellung neuer Kathodenaktivmaterialien (engl.: cathode aktive material; CAM) ist in jedem Falle vorzuziehen. Erste Anstrengungen eines nachhaltigen Wertstoffkreislaufs sind im Stand der Technik beschrieben.

So beschreibt US 2013/0302226 ein Verfahren zum Recyceln von Batterien, umfassend: Erzeugen einer Lösung von Batteriematerialien aus verbrauchten Zellen; Ausfällung von Verunreinigungen aus der erzeugten Lösung; Einstellen der Lösung, um ein vorbestimmtes Verhältnis von erwünschten Materialien zu erreichen; und Ausfällen des erwünschten Materials in dem vorbestimmten Verhältnis, um Kathodenmaterial für eine neue Batterie mit dem vorbestimmten Verhältnis der erwünschten Übergangsmetalle zu bilden.

US 2017/0077564 betrifft ein Verfahren zum Recycling von Lithium-Ionen-Batterien, umfassend: Identifizieren eines molaren Verhältnisses für Kathodenmaterialien für eine neue Batterie; Bilden einer Auslauglösung durch Kombinieren von zerkleinertem Batteriematerial aus einem Lithiumbatterie-Recyclingstrom mit einem sauren Auslaugmittel und Wasserstoffperoxid (H₂O₂), um Kathodenmaterialien von ungelösten Materialien zu trennen; Filtrieren der ungelösten Materialien aus der gebildeten Laugenlösung, so dass die gelösten Salze der Kathodenmaterialien in der Laugenlösung verbleiben; Bestimmen einer Zusammensetzung der Laugenlösung durch Identifizieren eines molaren Verhältnisses der darin gelösten Salze des Kathodenmaterials; Zugabe von Ni-, Co-, Mn- oder Al-Salzen in Sulfat- (xSO₄) oder Hydroxidform (xOH) auf der Grundlage der ermittelten Zusammensetzung, um das Molverhältnis der gelösten Kathodenmaterialsalze in der Laugenlösung so einzustellen, dass es dem identifizierten Molverhältnis für die recycelte Batterie entspricht, einschließlich der Zugabe einer Lösung von Aluminiumsulfaten und eines Chelatbildners; und Erhöhen des pH-Wertes der Auslaugungslösung auf mindestens 10, um Metallionen der Kathodenmaterialien auszufällen und zu filtern, um einen Ladungsmaterialvorläufer zu bilden, indem die Ni, Co, Mn- und Al-Salze, die in der Laugenlösung verbleiben, als kombiniertes Hydroxid (OH)₂ oder Carbonat (CO₃) mit einem Molverhältnis, das dem identifizierten Molverhältnis für die recycelte Batterie entspricht, wobei das Ladungsvorläufermaterial auf das Sintern reagiert, um aktive Kathodenmaterialien in einer Oxidform nach dem Sintern mit Lithiumcarbonat (Li₂CO₃) zu bilden. Hervorzuheben ist, dass alle pH-Werteinstellungen und insbesondere die Fällung des Präkursors durch Zugabe von NaOH erfolgt.

Zwar bemühen sich die im Stand der Technik vorgeschlagenen Verfahren, die Auftrennung und energieaufwendige Überführung der Übergangsmetalle in ihre festen Sulfate so weit wie möglich zu vermeiden und die erhaltene Mischlösung mit Ni/Co/Mn-Sulfat und Li₂SO₄ nach Einstellung der Übergangsmetallstöchiometrie direkt zur Fällung des Kathodenpräkursors zu verwenden. Allerdings wird im Rahmen der herkömmlichen Prozesse das Lithium durch die Zugabe von Na₂CO₃ als schwerlösliches Li₂C0₃ wiedergewonnen. Dieser Ansatz ist aber aufgrund der Löslichkeitsverhältnisse von Lithiumcarbonat und Lithiumsulfat aufwändig und macht eine tatsächlich quantitative Rückgewinnung des Lithiums quasi unmöglich oder nur unter einem erheblichen Kostenaufwand möglich. Eine nicht quantitative Rückgewinnung des Lithiums hat aber nicht nur Kostennachteile, sondern die Abgabe von lithiumsalzhaltigen Lösungen in die Natur (Binnengewässer) ist in der Regel aus Umweltschutzgründen nicht möglich. Des Weiteren stellt die Rückgewinnung des Lithiums als Carbonat eine Umsalzung dar, die mit einem weiteren Neutralsalzanfall, zusätzlich zur Neutralsalzfracht, die bei der Fällung des Präkursors entsteht, verbunden ist. Insgesamt ist so davon auszugehen, dass pro Mol LiMO₂ mindestens 1,5 Mol Na₂SO₄ entstehen. Es besteht somit weiterhin der Bedarf nach einem Verfahren, dass die effiziente und quantitative Rückgewinnung von Kathodenmaterialien aus nicht mehr genutzten Lithium-Ionen-Batterien erlaubt.

Dieser Bedarf wird durch die vorliegende Erfindung adressiert, die überraschend herausgefunden hat, dass die Herstellung von Kathodenmaterialien aus Batterieabfällen vollständig auf Lithiumhydroxid (LiOH) anstelle von Natriumhydroxid (NaOH) aufgebaut werden kann, wodurch zum einen der üblicherweise anfallende Neutralsalzabfall vermieden wird und natriumarme bzw.-freie Produkte hergestellt werden können ohne dabei den tatsächlichen Bedarf an LiOH zu erhöhen.

Daher ist ein erster Gegenstand der vorliegenden Erfindung ein Verfahren zur Herstellung von Kathodenmaterial aus Batterieabfällen, umfassend die Schritte:
a) Lösen des Kathodenmaterials aus zerkleinerten Batterieabfällen durch Behandlung mit einem Laugungsmittel unter Erhalt einer Kathodenmaterialvorläuferlösung;
b) Behandeln der Kathodenmaterialvorläuferlösung mit LiOH unter Erhalt eines festen Kathodenmaterialvorläufermischhydroxids und einem Filtrat enthaltend mindestens das Li-Salz des Laugungsmittels;
c) Abtrennen des in Schritt b) erhaltenen Filtrats und Aufspaltung des Filtrats in LiOH und Laugungsmittel mittels Elektrolyse;
d) Umsetzung des Kathodenmaterialvorläufermischhydroxids zu aktivem Kathodenmaterial unter zumindest teilweiser Verwendung des durch Schritt c) zurückgewonnenen LiOH.

Im Rahmen der vorliegenden Erfindung wurde überraschend festgestellt, dass durch die Verwendung von LiOH, dessen Verwendung wegen seiner hohen Kosten üblicherweise nicht bevorzugt ist, nicht nur die Menge an Neutralsalzabfall reduziert werden konnte, sondern sogar auch eine Verbesserung des CO₂-Fußabdrucks erreicht werden konnte.

Im Rahmen des erfindungsgemäßen Verfahrens werden die im Kathodenmaterial gebrauchter Lithium-Ionen-Batterien enthaltenen Übergangsmetalle, insbesondere Ni, Co und Mn, durch Behandlung mit einem Laugungsmittel in die lösliche Form ihrer Salze in eine Kathodenmaterialvorläuferlösung überführt. Aus dieser Lösung werden dann die Übergangsmetalle, gegebenenfalls nach Vorreinigung und/oder partieller Auftrennung, durch Zugabe von LiOH in Form eines festen Mischhydroxids ausgefällt, das den Vorläufer für das spätere aktive Kathodenmaterial bildet. Als Filtrat wird das Lithiumsalz des Laugungsmittels erhalten, das mittels Elektrolyse wieder in LiOH und das Laugungsmittel überführt wird. Aus dem im Rahmen des erfindungsgemäßen Verfahrens erhaltenen Mischhydroxid der Übergangsmetalle wird durch weitere Umsetzung das aktive Kathodenmaterial erhalten, das dann zur Herstellung von Lithium-Ionen-Batterien verwendet werden kann, wodurch der Wertstoffkreislauf geschlossen wird.

Im Rahmen des erfindungsgemäßen Verfahrens werden insbesondere gebrauchte Lithium-Ionen-Batterien als Batterieabfälle eingesetzt und insbesondere deren Kathodenmaterial. Das Kathodenmaterial ist insbesondere ausgewählt aus der Gruppe bestehend LiMO₂-Schichtstrukturen mit bevorzugt M = Ni, Co und/oder Mn und/oder AI, insbesondere LiCo-Oxide (LCO), Li(Ni/Co)-Oxide (LNCO), Li(Ni/Co/Mn)-Oxide (LNCMO), Li(Ni/Co/AI)-Oxide (LNCAO), Li(Ni/AI)-Oxide (LNAO), Li(Ni/Mn)-Oxide (LNMO) oder LiM₂O₄-Spinellstrukturen mit bevorzugt M = Ni, Co und/oder Mn, gegebenenfalls mit Al-Dotierung oder beliebigen Mischungen.

In einer bevorzugten Ausführungsform enthält das eingesetzte Kathodenmaterial Ni und Co und vorzugsweise Mn und/oder AI.

Das Kathodenmaterial kann vor Verwendung im erfindungsgemäßen Verfahren einer Waschung unterzogen werden, um organische Lösungsmittel und Elektrolytreste wie LiPF₆ abzutrennen. Daher umfasst das erfindungsgemäße Verfahren in einer bevorzugten Ausführungsform einen Reinigungsschritt des einzusetzenden Kathodenmaterials. Vorzugsweise besteht dieser Reinigungsschritt darin, das Kathodenmaterial mit Wasser zu waschen.

In einer bevorzugten Ausführungsform handelt es sich bei dem Laugungsmittel um eine Mineralsäure, vorzugsweise Schwefelsäure. Dem Laugungsmittel ist in einer weiterhin bevorzugten Ausführungsform ein Reduktionsmittel zugefügt, wobei es sich bei dem Reduktionsmittel vorzugsweise um H₂O₂ oder SO₂ handelt.

Das aus den Batterieabfällen gewonnene Kathodenmaterial kann weitere Bestandteile wie Eisen, Kupfer oder Aluminium enthalten, die durch die Behandlung des Kathodenmaterials mit dem Laugungsmittel ebenfalls in die Form ihrer löslichen Salze überführt werden und sich entsprechend in der Kathodenmaterialvorläuferlösung finden. In diesen Fällen ist es vorteilhaft, eine Vorreinigung durchzuführen. Daher ist eine Ausführungsform bevorzugt, in der das erfindungsgemäße Verfahren weiterhin eine pH-Wert abhängige Fällung mindestens eines der Salze von Fe, Cu und AI aus der Kathodenmaterialvorläuferlösung umfasst. Im Gegensatz zu der gängigen Vorgehensweise die Metalle durch Zugabe von NaOH zu fällen, erfolgt die Fällung im Rahmen des erfindungsgemäßen Verfahrens vorzugsweise durch Zugabe von LiOH. Alternativ kann die Abtrennung der Verunreinigungen auch durch Solventextraktion erfolgen. In diesem Fall erfolgt eine etwaige Aktivierung des verwendeten Extraktionsmittels oder pH-Werteinstellung ebenfalls vorzugsweise mit LiOH. Unabhängig von der gewählten Vorreinigungsmethode wird auf diese Weise der Eintrag von Natrium in den Verfahrenskreislauf vermieden.

Aus der Kathodenmaterialvorläuferlösung wird, gegebenenfalls nach Abtrennung von Fe, Cu und/oder AI, das Kathodenmaterialvorläufermischhydroxid NiₓCo_{y}Mn_{z}(OH)₂ ausgefällt, das als Grundlage für die Herstellung des aktiven Kathodenmaterials dient. Diese Vorgehensweise hat den Vorteil, dass auf eine aufwendige vollständige Trennung und separate Kristallisation der einzelnen Übergangsmetallsalze verzichtet werden kann. Anders als in einigen Verfahren des Stands der Technik beschrieben, wird im Rahmen des erfindungsgemäßen Verfahrens das Lithium nicht zusammen mit den Übergangsmetallsalzen ausgefällt, sondern verbleibt in Lösung.

Die Übergangsmetalle liegen in den aktiven Kathodenmaterialien (CAM) in einem bestimmten Verhältnis zueinander vor, das unter anderem über die Leistung der Batterie entscheidet. Dieses Verhältnis der Übergangsmetalle wird in der Regel bereits über eine entsprechende Einstellung im Vorläufer des Kathodenmaterials erreicht.

Daher ist eine Ausführungsform bevorzugt, in der das erfindungsgemäße Verfahren weiterhin einen Schritt der Kontrolle und gegebenenfalls Einstellung, vorzugsweise der Kathodenmaterialvorläuferlösung, in Bezug auf die Metallstöchiometrie abhängig von der gewünschten Zusammensetzung des herzustellenden aktiven Kathodenmaterials umfasst.

Das Einstellen der Metallstöchiometrie erfolgt herkömmlicher Weise durch Zugabe der entsprechenden Komponente oder Komponenten, was den Nachteil aufweist, dass teilweise erhebliche Mengen an "neuem" Material, meist in Form fester Sulfate, aufgebracht werden müssen, wie beispielsweise in US 2017/0077564 beschrieben. Bei der Kristallisation der Sulfate werden durch Verdampfen von Wasser erhebliche Mengen Energie verbraucht, welches im Falle des Nickels in einem CO₂-Fußabdruck von etwa 1,5 Kilogramm CO₂ pro Kilogramm Ni resultiert. Zum Schutz des Klimas sollte jedoch jegliche unnötige Erzeugung von CO₂ vermieden werden.

Im Rahmen der vorliegenden Erfindung wurde überraschend gefunden, dass die Einstellung durch gezielte Abtrennung erfolgen kann, wodurch der Einsatz von zusätzlichem Material und die damit verbundenen Nachteile vermieden werden. Daher ist eine Ausführungsform bevorzugt, in der das Einstellen durch wenigstens teilweise Abtrennung einer oder mehrerer der Bestandteile der Kathodenmaterialvorläuferlösung erfolgt, vorzugsweise durch Solventextraktion. In diesem Fall erfolgt eine etwaige Aktivierung des verwendeten Extraktionsmittels oder pH-Werteinstellung vorzugsweise mit LiOH. Diese Vorgehensweise ist besonders vorteilhaft, insofern als momentan eine Umstellung des bisherigen Kathodenmaterials, in dem Ni, Co und Mn in einem Verhältnis von 1:1:1 vorliegen, auf nickelreichere Materialien vorgenommen wird, in dem die Übergangsmetalle beispielsweise in einem Verhältnis von Ni:Co:Mn von 8:1:1 vorliegen, ein Verhältnis zu dessen Erreichung ansonsten große Mengen an Nickel zugegeben werden müssten.

Das erfindungsgemäße Verfahren sieht vor, dass aus der Kathodenmaterialvorläuferlösung durch Behandlung mit LiOH ein festes Kathodenmaterialvorläufermischhydroxid und ein Filtrat enthaltend mindestens das Li-Salz des Laugungsmittels erhalten werden. In einer bevorzugten Ausführungsform erfolgt die Behandlung derart, dass die Fällung des Kathodenmaterialvorläufers bei einem pH-Wert von 9 bis 14, vorzugsweise 10 bis 13 durchgeführt wird. Die Angabe des pH-Werts bezieht sich jeweils auf Betriebstemperatur. Um die Fällung in kontrollierter Weise durchzuführen und sphärische Partikel zu erhalten kann während des Fällprozesses NH₃ zugegeben werden, wobei die NH₃-Konzentration vorzugsweise 1-17 g/l, bevorzugt 5-15 g/l, besonders bevorzugt, 8-12 g/l beträgt. Die Fällung kann bei Raumtemperatur durchgeführt werden, bevorzugt allerdings zwischen einer Temperatur von 20 und 80 °C, besonders bevorzugt zwischen 40 und 65 °C.

In Schritt c) des erfindungsgemäßen Verfahrens wird das in Schritt b) erhaltene Filtrat mittels Elektrolyse in LiOH und entsprechendes Laugungsmittel aufgespalten, wodurch das in Schritt a) eingesetzte Laugungsmittel zurückgewonnen werden kann. In einer bevorzugten Ausführungsform wird für die Elektrolyse die Elektrodialysetechnologie verwendet. In einer besonders bevorzugten Ausführungsform werden für die Elektrolyse zusätzlich bipolare Membranen verwendet, wodurch eine deutliche Steigerung der Raum/ZeitAusbeute erzielt werden konnte.

Wie oben ausgeführt, kann das in Schritt b) des erfindungsgemäßen Verfahrens gewonnene Filtrat unter Umständen NH₃ enthalten. Daher kann zur Reinigung das Filtrat vor der Elektrolyse einer Destillation unterzogen werden.

Das erfindungsgemäße Verfahren strebt an, einen geschlossenen Kreislauf zur Verfügung zu stellen. Daher ist eine Ausführungsform bevorzugt, in der das in Schritt c) gewonnene Laugungsmittel wenigstens teilweise für die Behandlung des Kathodenmaterials in Schritt a) des erfindungsgemäßen Verfahrens eingesetzt wird.

In einer besonders bevorzugten Ausführungsform wird das in Schritt c) des erfindungsgemäßen Verfahrens gewonnene LiOH wenigstens teilweise zur Behandlung der Kathodenmaterialvorläuferlösung in Schritt b) verwendet.

In einer bevorzugten Ausführungsform wird das in Schritt c) des erfindungsgemäßen Verfahrens gewonnene LiOH wenigstens teilweise in einen festen Zustand überführt, vorzugsweise in Form von festem LiOH^{∗}₂O und/oder Li₂CO₃. Dieses kann vorteilhafter Weise im weiteren Verfahrenslauf eingesetzt werden. Die Umsetzung zu U₂CO₃ erfolgt vorteilhafter Weise durch Behandlung des LiOH mit CO₂.

Schritt d) des erfindungsgemäßen Verfahrens sieht die Umsetzung des gewonnenen Kathodenmaterialvorläufermischhydroxids zu dem aktiven Kathodenmaterial unter zumindest teilweiser Verwendung des in Schritt c) zurückgewonnenen LiOH vor. Die Umsetzung erfolgt in einer bevorzugten Ausführungsform durch Umsetzung mit festem LiOH^{∗}₂O oder Li₂CO₃.

In einer bevorzugten Ausführungsform wird für die Umsetzung des Kathodenmaterialvorläufermischhydroxids zu dem aktiven Kathodenmaterial wenigstens teilweise das in seinen festen Zustand überführte LiOH aus Schritt c) des erfindungsgemäßen Verfahrens eingesetzt, wodurch eine weitere Lücke im Kreislauf geschlossen wird.

Im Gegensatz zu herkömmlichen Verfahren des Stands der Technik setzt das erfindungsgemäße Verfahren auf LiOH. Daher ist eine Ausführungsform bevorzugt, in der in dem Verfahren kein NaOH eingesetzt wird. Dadurch wird zum einen der sonst anfallende Neutralsalzabfall vermieden und zum anderen ist die erforderliche elektrische Energie zur Rückgewinnung von LiOH durch Elektrolyse im Vergleich zur Herstellung von NaOH durch konventionelle Chlor-Alkali-Elektrolyse etwas geringer, was sich wiederum positiv auf den CO₂-Fußabdruck auswirkt. Der energetische Vorteil des Gesamtprozesses ist noch höher, wenn bei Benutzung von NaOH das erhaltene Neutralsalz Na₂SO₄ durch Wasserverdampfung auskristallisiert werden muss, weil es je nach Standort nicht direkt in die Umwelt abgegeben werden kann. Das vorliegende Verfahren weist nicht nur diesen energetischen Nachteil nicht auf, sondern ist bezüglich der Standortfrage vollkommen flexibel. Weiterhin werden die erzeugten Mengen an LiOH wieder zur Herstellung des Kathodenvorläufermaterials eingesetzt, sodass nur sehr geringe Mengen an LiOH tatsächlich im Kreislauf des Recyclingunternehmens vorhanden sein müssen.

Das erfindungsgemäße Verfahren macht es möglich, dass die einzige Eintragsquelle von Na das zu recycelnde Kathodenmaterial darstellt. Die eingetragenen Mengen an Na können dem Kreislaufprozess entzogen werden, beispielsweise über Solventextraktion oder Ionenaustauscher oder auch mittels elektrochemischer Verfahren. Dies kann je nach Bedarf kontinuierlich oder in mehr oder weniger großen Zeitabständen erfolgen. In diesem Zusammenhang erlaubt es das erfindungsgemäße Verfahren, dass das Na mit der Zeit aus dem globalen Batteriekreislauf verschwinden wird.

Ein weiterer Aspekt der vorliegenden Erfindung ist ein Kathodenmaterial, insbesondere für Lithium-Ionen-Batterien, erhalten gemäß dem erfindungsgemäßen Verfahren, wobei das Kathodenmaterial im Wesentlichen frei von Natrium ist, wobei der Gehalt an Natrium vorzugsweise weniger als 500 ppm, bevorzugt weniger als 50 ppm, besonders bevorzugt weniger als 10 ppm beträgt, jeweils bezogen auf das Gesamtgewicht des Kathodenmaterials. Vorzugsweise weist das Kathodenmaterial eine Stöchiometrie der Übergangsmetalle von Ni_{8/10}Co_{1/10}Mn_{1/10} oder Ni_{1/3}Co_{1/3}Mn_{1/3} auf.

Die Vorteile der vorliegenden Erfindung sollen anhand der folgenden Beispiele und Figuren näher beschrieben werden, die jedoch nicht als Einschränkung des Erfindungsgedanken zu verstehen sind.

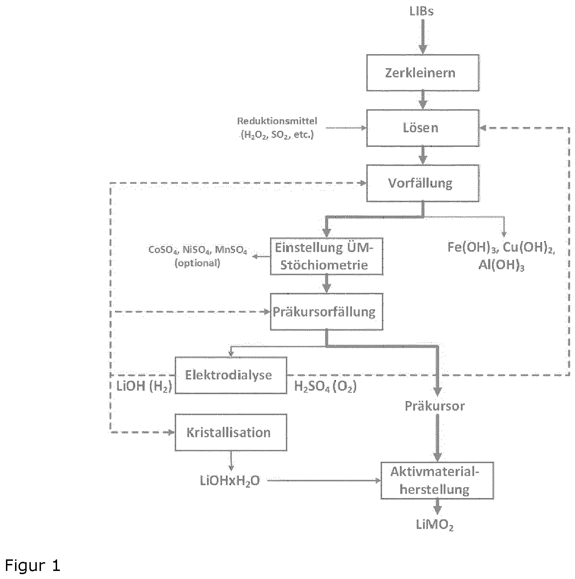

Figur 1 zeigt schematisch einen bevorzugten Ablauf des erfindungsgemäßen Verfahrens. Die verbrauchten Lithium-Ionen-Batterien (LIB) werden zunächst zerkleinert und dann mit einem Laugungsmittel und gegebenenfalls mit einem Reduktionsmittel versetzt, um die in dem Kathodenmaterial der verbrauchten LIBs enthaltenen Wertmetalle in Lösung zu bringen (Kathodenmaterialvorläuferlösung). Aus dieser Lösung können unerwünschte Bestandteile wie Fe, Cu oder AI in Form ihrer Hydroxide durch Zugabe von LiOH und einstellen des entsprechenden pH-Werts abgetrennt werden. Die abgetrennten Hydroxide können dann einem angrenzenden Wertstoffkreislauf zugeführt werden. In der gereinigten Lösung wird das Verhältnis von Ni, Co und Mn zueinander kontrolliert und gegebenenfalls je nach gewünschter Stöchiometrie im späteren aktiven Kathodenmaterial eingestellt. Anschließend werden die Metalle Ni, Co und Mn durch Zugabe von LiOH als Präkursor ausgefällt (Kathodenmaterialvorläufermischhydroxid) und ihrer weiteren Umsetzung zu dem gewünschten aktiven Kathodenmaterial zugeführt. Das bei der Fällung erhaltene Filtrat (Mutterlauge) wird mittels Elektrodialyse wieder in LiOH und Laugungsmittel, beispielsweise Schwefelsäure aufgetrennt. Das Laugungsmittel wird dem Verfahren wieder zugeführt und das LiOH teilweise zu festem LiOH^{∗}₂O umgesetzt und teilweise wieder in der Verfahrenskreislauf eingespeist. Das feste LiOH^{∗}₂O kann beispielsweise zur Herstellung des aktiven Kathodenmaterials aus dem Kathodenmaterialvorläufermischhydroxid verwendet werden, wodurch sich der Kreislauf schließt.

Die vorliegende Erfindung bietet den Vorteil, dass sie die effiziente Umstellung des gängigen Ni_{1/3}Co_{1/3}Mn_{1/3}-Kathodenmaterials zu dem Ni-reicheren Material Ni_{8/10}Co_{1/10}Mn_{1/10} erlaubt. Tabellen 1 und 2 stellen die erfindungsgemäße Lösung des Einstellens durch Abtrennung und die im Stand der Technik übliche Methode der Zugabe gegenüber. Tabelle 1 verdeutlicht die Mengen an Ni, Co und Mn, die bei 1000 kg gängigem Ni_{1/3}Co_{1/3}Mn_{1/3} ("Drittel-Mix") als Einsatzmaterial anfallen und die zur Erreichung der neuen Ni-reichen Stöchiometrie abzutrennenden Mengen an Co und Mn. Das so gewonnene "überschüssige" Co kann beispielsweise zu Co-Metallpulver verarbeitet und "überschüssiges" Mn als Mn-Hydroxid bzw. Mn-Oxyhydroxid direkt an die Stahlindustrie weitergeben werden.

**Tabelle 1:**

| | | | | |
|---|---|---|---|---|
| "Drittel"-Mix | Metall | **Ni** | **Co** | **Mn** |
| | Stöchiometrie | 1/3 | 1/3 | 1/3 |
| | kmol | 3,46 | 3,46 | 3,46 |
| | kg | 202,82 | 203,65 | 189,84 |
| | | | | |
| Abtrennung | | 0,00 | 178,19 | 166,11 |
| | | | | |
| Ni-reiches Aktivmaterial | kg | 202,82 | 25,46 | 23,73 |
| | kmol | 3,46 | 0,43 | 0,43 |
| | Stöchiometrie | 8/10 | 1/10 | 1/10 |
| | Metall | **Ni** | **Co** | **Mn** |

Alternativ kann NiSO₄ zugegeben werden, um die gewünschte Stöchiometrie einzustellen, wie im Stand der Technik beschrieben. Damit ergibt sich das in Tabelle 2 gezeigte Szenario mit offensichtlich hohem Anteil an Zukaufware.

**Tabelle 2:**

| | | | | |
|---|---|---|---|---|
| "Drittel"-Mix | Metall | **Ni** | **Co** | **Mn** |
| | Stöchiometrie | 1/3 | 1/3 | 1/3 |
| | kmol | 3,46 | 3,46 | 3,46 |
| | kg | 202,82 | 203,65 | 189,84 |
| | | | | |
| Zukauf | | 1419,75 | 0,00 | 0,00 |
| | | | | |
| Ni-reiches Aktivmaterial | kg | 1622,57 | 203,65 | 189,84 |
| | kmol | 27,64 | 3,46 | 3,46 |
| | Stöchiometrie | 8/10 | 1/10 | 1/10 |
| | Metall | **Ni** | **Co** | **Mn** |

Wie aus Tabelle 2 ersichtlich wird die Stöchiometrieeinstellung über massiven Zukauf von "virgin material" - in diesem Fall der Ni-Komponente - erreicht. Der Zukauf von Ni hinterlässt gemäß oberer Abschätzung somit einen CO₂-Fußabdruck von etwa 1,5 kg CO₂ pro kg Ni, der durch die erfindungsgemäße Vorgehensweise vermieden wird.

Im Folgenden werden die Vorteile verdeutlicht, die durch die Verwendung von LiOH anstelle von NaOH erzielt werden.

### Chloralkalielektrolyse

2 Na⁺_{(aq)} + 2 Cl⁻_{(ag)} + 2 H₂O → 2 Na⁺_{(aq)} + 2 OH⁻_{(aq)} + CI2 + H₂

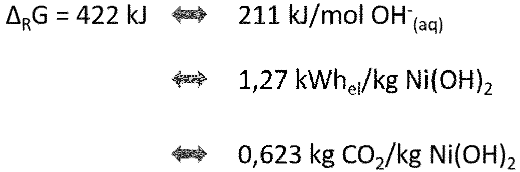

Mit der Chloralkalielektrolyse werden zurzeit weltweit etwa 60 Millionen Tonnen NaOH pro Jahr hergestellt, die im Ansatz gemäß Stand der Technik auch bei der Herstellung der Präkursoren für Aktivmaterialien in Lithiumionenbatterien verwendet werden. Dies entspricht einer Mindestemission von ca. 18 Millionen Tonnen CO₂ pro Jahr.

### Li₂S0₄- Elektrodialyse

2Li⁺_{(aq)} + 2 SO₄²⁻_{(aq)} + 3 H2O → 2 Li⁺_{(aq)} + 2 OH⁻_{(aq)} + SO₄²⁻_{(aq)} + H₂ + ½ O₂

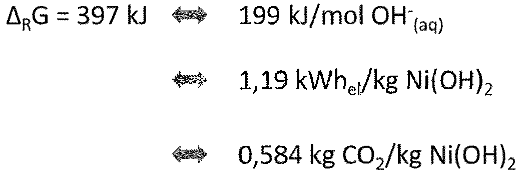

Alternativ dazu wird im Rahmen des erfindungsgemäßen Verfahrens vorteilhaft die Li₂S0₄-Elektrodialyse vorgesehen. Die Freien Enthalpien bezeichnen die mindestens aufzubringende elektrische Arbeit. Durch Überspannungen und ohmsche Widerstände sind die real erforderlichen elektrischen Arbeiten beispielsweise für die Chloralkalielektrolyse etwa 50 % höher. Das bedeutet, dass der Einsatz von NaOH als Fällungsmittel einen CO₂-Fußabdruck von etwa 1 kg CO₂ für 1 kg Präkursor aufweist.

Die Lithiumsulfat-Elektrolyse benötigt sogar etwas weniger Energie als die Chloralkalielektrolyse. Zudem besteht noch die Möglichkeit den Energiebedarf des elektrochemischen Prozesses weiter zu senken, indem bei Anwendung einer Lithiumsulfat-Elektrodialyse über Stapelung von bipolaren Membranen die Effizienz noch deutlich weiter erhöht wird.

## Patentansprüche

1. Verfahren zur Herstellung von Kathodenmaterial aus Batterieabfällen, umfassend die Schritte:
a) Lösen des Kathodenmaterials aus zerkleinerten Batterieabfällen durch Behandlung mit einem Laugungsmittel unter Erhalt einer Kathodenmaterialvorläuferlösung;
b) Behandeln der Kathodenmaterialvorläuferlösung mit LiOH unter Erhalt eines festen Kathodenmaterialvorläufermischhydroxids und einem Filtrat enthaltend mindestens das Li-Salz des Laugungsmittels;
c) Abtrennen des in Schritt b) erhaltenen Filtrats und Aufspaltung des Filtrats in LiOH und Laugungsmittel mittels Elektrolyse;
d) Umsetzung des Kathodenmaterialvorläufermischhydroxids zu aktivem Kathodenmaterial unter zumindest teilweiser Verwendung des durch Schritt c) zurückgewonnenen LiOH.

2. Verfahren gemäß Anspruch 1, **dadurch gekennzeichnet, dass** das Kathodenmaterial Ni und Co und vorzugweise Mn und/oder AI enthält.

3. Verfahren gemäß einem der vorangehenden Ansprüche, **dadurch gekennzeichnet, dass** das Verfahren weiterhin einen Reinigungsschritt des Kathodenmaterials umfasst, wobei dieser Reinigungsschritt vorzugsweise aus einer Waschung mit Wasser besteht.

4. Verfahren gemäß wenigstens einem der vorangehenden Ansprüche, **dadurch gekennzeichnet, dass** es sich bei dem Laugungsmittel um eine Mineralsäure, vorzugsweise Schwefelsäure, handelt, wobei das Laugungsmittel weiterhin ein Reduktionsmittel, vorzugsweise H₂O₂ oder SO₂ umfasst.

5. Verfahren gemäß wenigstens einem der vorangehenden Ansprüche, **dadurch gekennzeichnet, dass** das Verfahren weiterhin eine pH-Wert abhängige Fällung der Salze von Fe, Cu und/oder AI aus der Kathodenmaterialvorläuferlösung umfasst, wobei die Einstellung des pH-Werts vorzugsweise mittels LiOH-Zugabe erfolgt.

6. Verfahren gemäß wenigstens einem der vorangehenden Ansprüche, **dadurch gekennzeichnet, dass** das Verfahren weiterhin einen Schritt der Kontrolle und gegebenenfalls Einstellung der Kathodenmaterialvorläuferlösung in Bezug auf die Metallstöchiometrie abhängig von der gewünschten Zusammensetzung des herzustellenden Kathodenmaterials umfasst.

7. Verfahren gemäß Anspruch 6, **dadurch gekennzeichnet, dass** das Einstellen durch wenigstens teilweise Abtrennung einer oder mehrerer der Bestandteile der Kathodenmaterialvorläuferlösung erfolgt.

8. Verfahren gemäß wenigstens einem der vorangehenden Ansprüche, **dadurch gekennzeichnet, dass** die Kathodenmaterialvorläuferlösung einen pH-Wert von 9 bis 14, vorzugsweise 10 bis 13 aufweist.

9. Verfahren gemäß wenigstens einem der vorangehenden Ansprüche, **dadurch gekennzeichnet, dass** das Filtrat vor der Elektrolyse einer Destillation unterzogen wird.

10. Verfahren gemäß wenigstens einem der vorangehenden Ansprüche, **dadurch gekennzeichnet, dass** für die Elektrolyse die Elektrodialysetechnologie verwendet wird.

11. Verfahren gemäß wenigstens einem der vorangehenden Ansprüche, **dadurch gekennzeichnet, dass** für die Behandlung in Schritt a) wenigstens teilweise das in Schritt c) zurückgewonnene Laugungsmittel verwendet wird.

12. Verfahren gemäß wenigstens einem der vorangehenden Ansprüche, **dadurch gekennzeichnet, dass** das in Schritt c) gewonnene LiOH wenigstens teilweise in einen festen Zustand überführt wird, vorzugsweise in Form von festem LiOH ^{∗}xH₂O und/oder Li₂CO₃.

13. Verfahren gemäß Anspruch 12, **dadurch gekennzeichnet, dass** wenigstens ein Teil des in seinen festen Zustand überführten LiOHs zur Umsetzung der Kathodenmaterialvorläufermischhydroxids zu aktivem Kathodenmaterial verwendet wird.

14. Verfahren gemäß wenigstens einem der vorangehenden Ansprüche, **dadurch gekennzeichnet, dass** es sich bei dem in Schritt b) verwendeten LiOH wenigstens teilweise um das in Schritt c) zurückgewonnene LiOH handelt.

15. Verfahren gemäß wenigstens einem der vorangehenden Ansprüche, **dadurch gekennzeichnet, dass** in dem Verfahren kein NaOH eingesetzt wird.

16. Kathodenmaterial, erhalten gemäß einem Verfahren gemäß wenigstens einem der vorangehenden Ansprüche, **dadurch gekennzeichnet, dass** das Kathodenmaterial im Wesentlichen frei von Natrium ist, wobei der Gehalt an Natrium oder einer seiner Verbindungen vorzugsweise weniger als 500 ppm, bevorzugt weniger als 50 ppm, besonders bevorzugt weniger als 10 ppm beträgt, jeweils bezogen auf das Gesamtgewicht des Kathodenmaterials.
